Europäisches Patentamt

European Patent Office

Office européen des brevets

(19)

(11) Veröffentlichungsnummer: **0 035 630**
**A2**

## (12) EUROPÄISCHE PATENTANMELDUNG

(21) Anmeldenummer: **81100330.0**

(22) Anmeldetag: **17.01.81**

(51) Int. Cl.³: **C 08 L 23/08**

(30) Priorität: **01.02.80 DE 3003658**

(43) Veröffentlichungstag der Anmeldung:
**16.09.81 Patentblatt 81/37**

(84) Benannte Vertragsstaaten:
**BE DE FR GB IT NL**

(71) Anmelder: **EC ERDÖLCHEMIE GMBH**
**Postfach 75 2002**
**D-5000 Köln 71(DE)**

(72) Erfinder: **Stahlke, Kurt-Rainer, Dr.**
**Amselweg 7**
**D-5067 Kürten(DE)**

(72) Erfinder: **Becker, Wolfgang**
**Bruchhauser Weg 36**
**D-4010 Hilden(DE)**

(72) Erfinder: **Mühlbauer, Richard**
**Johannesberg 12**
**D-5653 Leichlingen 1(DE)**

(72) Erfinder: **Streib, Hugo, Dr.**
**Am Heckerhof 56**
**D-4150 Krefeld(DE)**

(74) Vertreter: **Dill, Erwin, Dr. et al,**
**c/o BAYER AG Zentralbereich Patente Marken und**
**Lizenzen Bayerwerk**
**D-5090 Leverkusen 1(DE)**

(54) Mischungen, enthaltend ein Ethylen/Vinylacetat-Copolymer und Ethylen/Propylen-Kautschuk, Verfahren zu ihrer Herstellung und ihre Verwendung.

(57) Die Erfindung betrifft Mischungen, die ein Ethylen-Vinylacetat-Copolymeres und 2 bis 30 Gew.-% des Gewichts der Mischung Ethylen-Propylen-Kautschuk enthalten und verbesserte mechanische Eigenschaften, verbesserte Schockfestigkeit und verbesserte Spannungsrißbeständigkeit bei praktisch unverändert hoher Siegelnahtfestigkeit aufweisen. Die Mischungen können durch Coextrusion von Ethylen-Vinylacetat-Copolymeren mit Ethylen-Propylen-Kautschuk erhalten werden. Sie können beispielsweise zu Folien, Formkörpern, Straßenbelägen und Korrosionsschutzüberzügen verwendet werden.

Croydon Printing Company Ltd.

0035630

EC Erdölchemie GmbH

Köln-Worringen
Ha/bc/Th/c

**Mischungen, enthaltend ein Ethylen/Vinylacetat-Copolymeres und Ethylen/Propylen-Kautschuk, Verfahren zu ihrer Herstellung und ihre Verwendung**

Die vorliegende Erfindung betrifft Mischungen, die ein Ethylen/Vinylacetat-Copolymeres und Ethylen/Propylen-Kautschuk enthalten. Die Erfindung betrifft weiterhin ein Verfahren zu ihrer Herstellung und ihre Verwendung für Folien und Formkörper.

Es ist bekannt, Polyolefine mit Kautschuk-Typen zu verschneiden, um die Eigenschaften der erhaltenen Extrudate, wie Formkörper oder Folien, zu verbessern. So werden in GB-PS 825 884 Abmischungen von Polyolefinen mit einem Kristallisationsgrad von mindestens 80 % mit Butylkautschuk beschrieben. Die Abmischungen enthalten 1 bis 20 Teile Polyolefin pro 100 Teilen Butylkautschuk. Hierbei werden Formkörper mit einer verbesserten Bruchdehnung und verbesserten Kaltfließeigenschaften gegenüber reinem Butylkautschuk erhalten. Aus GB-PS 1 084 284 sind Abmischungen von Polyolefinen mit einem Kristallinitätsgrad von mindestens 50 % mit einem Ethylen-Propylen-Terpolymeren (EPDM) beschrieben. Hierbei beträgt der Anteil des EPDM 10 bis 60 % des Gesamtgewichts. Diese Abmischung ergibt

EC 102-Ausland

beispielsweise Folien mit verbesserter Reißfestigkeit gegenüber Folien aus dem reinen Polyolefin.

Die in GB-PS 1 037 820 beschriebenen Abmischungen aus Ethylen/Propylen-Kautschuk (EPM) und Polyethylen zeigen keine signifikanten Unterschiede im Vergleich zu reinem Polyethylen. Weiterhin sind aus der US-PS 3 758 643 Extrudate aus Homo-polyolefinen und EPM oder EPDM mit einem Gel-(Kautschuk-)Anteil von 30 bis 90 Gew.-% der Gesamtmischung bekannt, die gegenüber Butadien-Styrol-Blockcopolymeren eine größere Härte und eine geringere bleibende Verformung aufzeigen.

Allen Polyolefin/EPDM-Abmischungen ist gemeinsam, daß sie beim Verarbeiten, beispielsweise zu Folien, infolge der restlichen freien Doppelbindungen des Kautschukanteils zu Vernetzungen neigen. Hierdurch wird die Güte der Folienoptik empfindlich verringert. Weiterhin kommt es zu Anbackungen und Stippenbildung im Extruder. Der zugesetzte Kautschukanteil setzt häufig die Siegelnahtfestigkeit von Folien gegenüber Folien aus reinen Polyolefinen deutlich herab. Folien aus Hochdruckpolyethylen/EPM-Abmischungen zeigen generell eine schlechte Verträglichkeit der beiden Polymeranteile, die sich in makroskopischen und mikroskopischen Inhomogenitäten zeigt und die Güte der Folienoptik und die mechanischen Eigenschaften negativ beeinflußt.

Es wurden nun neue Mischungen gefunden, die im wesentlichen ein Ethylen/Vinylacetat-Copolymeres und 2 bis 30 Gew.-%,

EC 102

bezogen auf das Gewicht der Mischung, Ethylen/Propylen-Kautschuk enthalten.

Unter den erfindungsgemäßen Mischungen seien solche bevorzugt genannt, die 3 bis 20 Gew.-%, besonders bevorzugt 12 bis 18 Gew.-%, bezogen auf das Gesamtgewicht der Mischung, an Ethylen/Propylen-Kautschuk (EPM) enthalten.

Als Ethylen/Vinylacetat-Copolymeres (EVA) für die erfindungsgemäßen Mischungen sei beispielsweise ein solches mit einer äquivalenten Dichte von 0,910 bis 0,930 $g/cm^3$, bevorzugt 0,918 bis 0,923 $g/cm^3$ genannt, wobei die äquivalente Dichte besagt, daß eine Folie aus dem EVA-Copolymeren in ihrer Steifigkeit in etwa einer Folie gleicher Wanddicke aus einem Ethylen-Homopolymerisat der genannten Dichte entspricht.

Als Schmelzindex für das eingesetzte EVA sei beispielsweise ein Wert von 0,1 bis 5, bevorzugt 0,3 bis 3 g/ 10 min (190°C) genannt.

Die erfindungsgemäß einsetzbaren EVA-Typen haben einen Vinylacetat-Gehalt von beispielsweise 0,1 bis 20, bevorzugt 0,5 bis 10, besonders bevorzugt 1 bis 5 Gew.-%, bezogen auf das Gesamtgewicht des EVA.

Als EPM für die erfindungsgemäßen Mischungen seien beispielsweise solche mit einem Propylenanteil von 20 bis 40, bevorzugt 27 bis 32 Gew.-%, bezogen auf das Gesamtgewicht des EPM, genannt. Diese haben beispielsweise einen Mooney-Wert zwischen 36 und 100 (gemessen nach DIN 53 523) und eine Polymerrohfestigkeit von 3 bis 20 mPas, bevorzugt von 10 bis 14 mPas

EC 102

(nach DIN 53 504).

Der Bereich der Mooney-Werte von 36 bis 100 umfaßt beispielsweise Typen mit Mooney-Werten von 36 bis 55, die eine statistische Normalverteilung der beiden Comonomeren aufzeigen, aber auch Typen mit Mooney-Werten von etwa 80 bis 99, bei denen die beiden Comonomeren jeweils in Sequenzen in Copolymeren angeordnet sind.

Die erfindungsgemäß einsetzbaren EPM-Typen haben nahezu keine Doppelbindungen und sind daher unter normalen Verarbeitungsbedingungen nicht vernetzbar. Die erfindungsgemäßen Mischungen können weiterhin übliche Zusätze, wie Stabilisatoren, Farbmittel oder Gleitmittel in üblichen Konzentrationen enthalten.

Überraschenderweise zeigen die erfindungsgemäßen Mischungen keinerlei Unverträglichkeiten der EVA-Typen mit den EPM-Typen. Dies ist bis hinein in den mikroskopischen Bereich zu beobachten. Eine geringe Verminderung der Folienoptik der erfindungsgemäßen Mischungen gegenüber den EVA-Grundharzen wird durch einen geringen, dem Fachmann bekannten Talkumgehalt des EPM-Kautschuks verursacht.

Die aus den erfindungsgemäßen Mischungen herstellbaren Folien, Formkörper, Profile und andere Extrudate zeigen im Vergleich zu den EVA-Grundharzen verbesserte mechanische Eigenschaften. Hierzu sei beispielsweise eine Verbesserung der Schockfestigkeit (nach DIN 53 373)

EC 102

gegenüber dem jeweiligen EVA-Grundharz um mindestens 30 % des Wertes bei Raumtemperatur, beispielsweise um 40 bis 90 % bei Raumtemperatur und um mindestens 20 % des Wertes bei -20°C, beispielsweise um 30 bis 40 % des Wertes bei -20°C genannt. Eine Beeinträchtigung der Siegelnahtfestigkeit erfolgt bei den erfindungsgemäßen Mischungen gegenüber dem EVA-Grundharz praktisch nicht. Diese Eigenschaften sind beispielsweise bei der Verwendung für Folien im Schwersackbereich und bei Folien für Tieftemperaturverpackung äußerst wertvoll.

Weiterhin zeigen die aus den erfindungsgemäßen Mischungen hergestellten Formkörper, Profile und andere Extrudate eine verbesserte Spannungsrißbeständigkeit (nach Normvorschrift ASTM M-1693-60 T). Als verbesserte Spannungsrißbeständigkeit sei beispielsweise ein $F_{100}$-Wert von mindestens 400 Stunden, bevorzugt von mindestens 1000 Stunden, entsprechend der genannten Normvorschrift, genannt.

Die Erfindung umfaßt die Verwendung der erfindungsgemäßen Mischungen für die Herstellung von Folien, sowie die Verwendung der erfindungsgemäßen Mischungen für die Herstellung von Formkörpern.

Als Formkörper seien beispielsweise genannt: Spritzgußteile, Hohlkörper und Extrudate, wie z.B. Platten, beispielsweise für Deponiezwecke, Rohre, Profile, beispielsweise für Dichtungen und Draht- und Kabelummantelungen. Die Erfindung umfaßt ebenso die Verwendung

EC 102

der erfindungsgemäßen Mischungen für die Herstellung von Straßenbelägen und Korrosionsschutzüberzügen z.B. in Form von Pulver, das in bekannter Weise, wie mittels Wirbelsintern, auf Metallunterlagen aufgebracht wird.

Weiterhin wurde ein Verfahren zur Herstellung von Mischungen, die ein Ethylen/Vinylacetat-Copolymeres und 2 bis 30 Gew.-%, bezogen auf das Gewicht der Mischung, Ethylen/Propylen-Kautschuk enthalten, gefunden, das dadurch gekennzeichnet ist, daß man ein Ethylen/Vinylacetat-Copolymeres mit 2 bis 30 Gew.-%, bezogen auf das Gesamtgewicht der Mischung, an Ethylen/Propylen-Kautschuk, gegebenenfalls unter Zusatz von üblichen Stabilisatoren, Farbmitteln oder Gleitmitteln, in einem Extruder in an sich bekannter Weise vermischt.

Zur Vermischung der Ausgangsstoffe für die erfindungsgemäßen Mischungen kann beispielsweise von einem 50 gew.-%igen Masterbatch aus dem Kautschuk und dem EVA-Grundharz ausgegangen werden, das mit dem EVA-Grundharz auf die vorgesehene Endkonzentration eingestellt wird. Hierbei ist der Einsatz eines üblichen Einwellen-Extruders ausreichend. Es ist jedoch auch möglich, in nur einem Arbeitsschritt die vorgesehene Endkonzentration des Kautschukanteils durch gemeinsames Vermischen mit dem EVA-Grundharz herzustellen, wenn zur Extrusion ein Zweiwellen-Extruder herangezogen wird. Diese letztere Variante ist bevorzugt. Gegebenenfalls zugesetzte Stabilisatoren, Farbmittel oder Gleitmittel können als solche oder in Form von Master-

EC 102

batches der genannten Mittel in dem zugehörigen EVA-Grundharz zugesetzt werden.

Die Vermischung der genannten Ausgangsstoffe in einem Extruder wird beispielsweise bei einer Temperatur von 120-240°C, bevorzugt 160-180°C, durchgeführt.

Die erfindungsgemäß hergestellten Mischungen werden in Granulatform erhalten und können im Sinne der erfindungsgemäßen Verwendung beispielsweise auf praxisüblichen Blasfolienextrudern oder bei der Herstellung von Formkörpern und Profilen mit Hilfe üblicher Extruder oder Spritzgußmaschinen weiterverarbeitet werden.

EC 102

## Beispiele

Die äquivalente Dichte besagt, daß beispielsweise eine Folie aus einem EVA-Copolymeren in der Steifigkeit in etwa einer Folie gleicher Wanddicke aus einem Ethylen-Homopolymerisat der genannten Dichte entspricht. Die Prüfung auf Schockfestigkeit erfolgt nach DIN 53 373 (elektronischer Durchstoßversuch), die der Siegelnahtfestigkeit angelehnt an DIN 53 455 (Zugversuch). Bestimmung von Glanz und Transparenz erfolgte nach der Normvorschrift ASTM D-2457-65 T. Die Spannungsrißbeständigkeit wurde nach ASTM D-1693-60 T an 2 mm starken Preßplatten ermittelt; die Platten wurden vor der Prüfung 16 Stunden bei 70°C getempert. Die Mooney-Viskosität wurde nach DIN 53 523 bestimmt.

## Beispiel 1

Ein EVA-Copolymer-Grundharz (Vinylacetat-Gehalt = 3,5 Gew.-%) mit einem Schmelzindex von 0,4 g/10 min (190°C) und einer äquivalenten Dichte von 0,918 g/ $cm^3$ wurde mit 50 Gew.-%, bezogen auf die Gesamtmenge der Harze, eines EPM-Kautschuks mit einem Mooney-Wert von 36 bis 55 (statistischer Normaltyp), der nach einer dem Fachmann bekannten Bezeichnung "nur mit Peroxid vernetzbar" ist, vermischt und über einen ZSK 32-Doppelschneckenextruder bei 160 bis 180°C zu einem Masterbatch extrudiert und anschließend granuliert. Nach Abmischen dieses Masterbatches mit dem oben beschriebenen EVA-Grundharz auf eine Endkonzentration von 15 Gew.-% Kautschuk wurde auf einem

EC 102

Kiefel-RO-25-Blasfolienextruder mit einem Blaskopf von 200 mm Durchmesser, einer Spaltbreite von 0,8 mm, einer Massetemperatur von 200°C, einer Abzugsgeschwindigkeit von 15 m/min und einem Druck von 180 bis 220 bar eine Blasfolie mit einem Aufblasverhältnis von 1:2,5 und einer Schichtdicke von 100µm hergestellt. Die Folie wies eine Schockfestigkeit von $W_s$ = 1,17 J auf (23°C), während beim EVA-Grundharz die Schockfestigkeit $W_s$ = 0,81 J betrug.

Beispiel 2

Ein wie in Beispiel 1 beschriebenes EVA-Grundharz wurde, wie ebenfalls in Beispiel 1 gezeigt, mit 50 Gew.-%, bezogen auf die Gesamtmenge der Harze eines EPM-Kautschuks mit einem Mooney-Wert von 80 bis 99 (Sequenztyp), der "nur mit Peroxid vernetzbar" ist, vermischt und nach Abmischen auf eine 15 gew.-%ige Endkonzentration des Kautschuks zu einer 100µm starken Folie verarbeitet. Die Schockfestigkeit betrug bei 23°C $W_s$ = 1,35 J, bei dem EVA-Grundharz $W_s$ = 0,81 J; die Schockfestigkeit betrug bei -20°C $W_s$ = 0,51 J bzw. 0,38 J bei dem EVA-Grundharz. Die Siegelnahtfestigkeit lag bei 21,4 N/15 mm, beim EVA-Grundharz 24,6 N/15 mm. Die Transparenz lag bei 46 % (EVA-Grundharz 52 %), der Glanz betrug 32 (37) Skalenteile.

Beispiel 3

Ein Grundharz auf der Basis eines EVA-Copolymeren mit einem Vinylacetatgehalt von 2,0 Gew.-% und ei-

EC 102

nem Schmelzindex von 0,4 g/10 min (190°C) und einer äquivalenten Dichte von 0,922 g/cm$^3$ wurde wie in Beispiel 1 mit einem EPM-Kautschuk mit einem Mooney-Wert von 80 bis 99 (Sequenztyp), der "nur mit Peroxid vernetzbar" ist, zu einem 50 gew.-%igen Masterbatch verarbeitet. Nach Abmischen auf die Endkonzentration von 15 Gew.-% EPM, bezogen auf die Gesamtmenge der Harze, wurde eine 100µm starke Folie hergestellt. Die Schockfestigkeit bei 23°C betrug $W_s$ = 1,1 J, die des EVA-Grundharzes 0,59 J. Die Siegelnahtfestigkeit lag bei 24,6 N/15 mm, verglichen mit 24,3 N/15 mm beim EVA-Grundharz. Die Transparenz betrug 38 % (Grundharz 38 %), der Glanz 15 (19) Skalenteile.

Beispiel 4 (Vergleichsbeispiel)

Ein homopolymeres Hochdruck-Polyethylen-Grundharz mit einem Schmelzindex von 3,0 g/10 min (190°C) und einer Dichte von 0,923 g/cm$^3$ wurde wie in Beispiel 1 mit einem in Beispiel 2 beschriebenen EPM-Kautschuk kompoundiert und nach Einstellen auf eine Endkonzentration von 15 Gew.-% Kautschuk, bezogen auf die Gesamtmenge der Harze, zu einer 100µm starken Folie verblasen. Die Folie wies Unverträglichkeiten in Form einer Vielzahl von Agglomeraten auf.

Beispiel 5

Aus der in Beispiel 3 beschriebenen Abmischung wurden 2 mm starke Preßplatten hergestellt und dem Bell-Test nach ASTM-Norm D-1693-60 T (10 % Igepal) unterzogen,

EC 102

nachdem die Platten 16 Stunden bei 70°C getempert worden waren. Es wurde ein $F_{100}$-Wert von mehr als 1000 Stunden erhalten, während das Grundharz einen $F_{100}$-Wert von 1,25 Stunden aufwies.

Beispiel 6

Ein EVA-Copolymer mit einem Vinylacetatgehalt von 8,5 Gew.-% und einem Schmelzindex von 1,5 g/10 min (190°C) und einer äquivalenten Dichte von 0,910 g/cm$^3$ wurde wie in Beispiel 1 mit dem in Beispiel 2 beschriebenen EPM-Kautschuk so verarbeitet, daß eine Endkonzentration von 3,75 Gew.-% Kautschuk, bezogen auf die Gesamtmenge der Harze, vorlag. An Preßplatten wie in Beispiel 5 wurde ein $F_{100}$-Wert von mehr als 1000 Stunden erhalten, während das Grundharz einen $F_{100}$-Wert von 70 Stunden hatte.

EC 102

Patentansprüche

1) Mischungen, enthaltend im wesentlichen ein Ethylen/Vinylacetat-Copolymeres und 2 bis 30 Gew.-%, bezogen auf das Gewicht der Mischung, Ethylen/Propylen-Kautschuk.

2) Mischungen nach Anspruch 1, bei denen das Ethylen/Vinylacetat-Copolymere eine äquivalente Dichte von 0,910 bis 0,930 g/cm$^3$, einen Schmelzindex von 0,1 bis 5 g/10 min (190°C) und einen Vinylacetat-Gehalt von 0,1 bis 20 Gew.-%, bezogen auf das Gewicht des Copolymeren, hat.

3) Mischungen nach Anspruch 1, bei denen der Ethylen/Propylen-Kautschuk 20 bis 40 Gew.-% Propylen, bezogen auf das Gesamtgemisch des Kautschuks hat und eine Polymerrohfestigkeit von 3 bis 20 mPas aufweist.

4) Mischungen nach Anspruch 1 und 3, in denen der Ethylen/Propylen-Kautschuk einen Mooney-Wert von 36 bis 100 aufweist.

5) Verfahren zur Herstellung von Mischungen, die ein Ethylen/Vinylacetat-Copolymeres und 2 bis 30 Gew.-%, bezogen auf das Gesamtgewicht der Mischung, Ethylen/Propylen-Kautschuk enthalten, dadurch gekennzeichnet, daß man ein Ethylen/Vinylacetat-Copolymeres mit 2 bis 30 Gew.-%, bezogen auf das Gesamtgewicht der Mischung, eines Ethylen/Propylen-Kautschuks, gegebenenfalls unter Zusatz von üblichen Stabilisatoren, Farbmitteln und

EC 102

Gleitmitteln in einem Extruder in an sich bekannter Weise vermischt.

6) Verfahren nach Anspruch 5, dadurch gekennzeichnet,
daß man den Ethylen/Propylen-Kautschuk in Form
eines Masterbatches einsetzt,   das neben dem
Ethylen/Vinylacetat-Copolymeren 20 bis 50 Gew.-%,
bezogen auf das Gesamtgewicht des Masterbatches,
an Ethylen/Propylen-Kautschuk enthält.

7) Verfahren zur Herstellung von Mischungen nach Anspruch 5 und ihre Weiterverarbeitung zu Extrudaten in nur einem Arbeitsschritt, dadurch gekennzeichnet, daß die Ausgangsstoffe, gegebenenfalls
unter Zusatz von üblichen Stabilisatoren, Farbmitteln oder Gleitmitteln, in einem Zweiwellen-
extruder vermischt werden.

8) Verwendung der Mischungen nach Anspruch 1 zur
Herstellung von Folien.

9) Verwendung von Mischungen nach Anspruch 1 zur
Herstellung von Formkörpern.

10) Verwendung von Mischungen nach Anspruch 1 zur
Herstellung von Straßenbelägen und Korrosionsschutzüberzügen.

EC 102